## Europäisches Patentamt

## European Patent Office

## Office européen des brevets

(11) Publication number: **0 224 447**
**A1**

(12) # EUROPEAN PATENT APPLICATION

(21) Application number: **86830307.4**

(22) Date of filing: **24.10.86**

(51) Int. Cl.⁴: **G 01 S 13/44**

(30) Priority: **29.10.85 IT 4872885**

(43) Date of publication of application:
**03.06.87 Bulletin 87/23**

(84) Designated Contracting States:
**DE FR GB NL SE**

(71) Applicant: **SELENIA INDUSTRIE ELETTRONICHE ASSOCIATE S.p.A.**
**Via Tiburtina, KM 12.400**
**I-00131 Roma(IT)**

(72) Inventor: **Galati, Gaspare**
**Via C. Corvisieri, 22**
**I-00162 Roma(IT)**

(72) Inventor: **Jacovitti, Giovanni**
**Viale XXX Aprile, 10**
**I-00152 Roma(IT)**

(74) Representative: **Emiliani, Gabriele, Ing.**
**c/o ITALPATENT Via Agri, 3**
**I-00198 Roma(IT)**

(54) **Angle measurement device for amplitude monopulse receivers.**

(57) Device for angle measurement for inclusion within a monopulse amplitude comparison radar receiver for particular application within secondary radars. In essence it consists of a log ($\Sigma$) signal comparator (9) against a detection threshold, which is meant to enable further processing, two analogue-numerical converters (10, 11), and a target azimuth decoder (12) for receiving outputs $\Sigma$ and $\Delta$ from said converters.

FIG. 5

EP 0 224 447 A1

0224447

- 1 -

## ANGLE MEASUREMENT DEVICE FOR AMPLITUDE MONOPULSE RECEIVERS

The present invention takes regard for an azimuth angle measurement device, to be used in an amplitude comparison monopulse radar receives. The invention belongs to the field of radar systems, in particular secondary surveillance radars.

This type of radar is known to those introduced to the field, under the centrals SSR and in the following we shall use this abbreviation for convenience.

It is a known fact that SSRS can:

- detect aircraft equipped with transponders by decoding relevant replies, measuring the time of arrival and the azimuth angle of arrival so that the aircraft may be localized.

The device, which is the argument of this invention, refers to the azimuth angle measurement problem, for which a very high accuracy is required, so as not to incur inacceptably large aircraft localization errors, mostly at large detection ranges.

Till now, the high accuracy requirement has been achieved by use of monopulse receivers. Such receivers can evaluate the azimuth of each return pulse by comparing the signals received by two antenna patterns called $(\Sigma)$ and $(\Delta)$.

For information purposes a few specific works, well known to literature, related to a number of monopulse receivers and to all relevant reasons for error are hereby provided:

/1/ G. Jacovitti: "Performance Analysis of Monopulse Receivers for secondary surveillance Radar, IEEE Trans. On Aerospace & Electronic Systems, vol. AES-19, No 6 Nov. 1983 pp 884-897.

The device in question is particularly applicable to amplitude comparison receivers, called LI in article /1/ and further described in the following:

/2/ R.J. Plant, M.C. Stevens: "A Practical Application of Monopulse Processing to the solution of SSR Problems, International Conf. of Radar, Paris, May 21$^{st}$/24$^{th}$ 1984 pp 56-60;

/3/ G. Galati, C. Benedetti, E. Giaccari, M. Momo: The evolution of SSR "Proceedings of the Int. Radar symp. India (IRSI-83) Oct. 9-12 1983 Bangalore pp 416-423.

To make the comparison between known technique and device presented easier, the following illustrations give:

Fig. 1 Outline schematic of an amplitude comparison monopulse receiver.

Fig. 2 Detailed drawuy of the IF receiver and detectors providing the following three signals as output: log ($\Sigma$), log ($\Delta$) and sign ($\bar{\phi}_{\Sigma\Delta}$) starting from which in the following part of the receiver shown in figure 3, detection and azimuth measurement are performed. The latter, in present technique, is obtained by the following process:

$$\widehat{\Theta} = Skm\ b^{-z} \tag{1}$$

where:

is the measured azimuth

b    is the base of the logarithmic representation (for decimal logardhms, in common use, b = 10),

z    is the logarithm of the ratio of the sum and difference amplitude channels

S    is the sign of the relative phase between sum and difference channel:

$S = Sign\ (\cos \bar{\phi}_{\Sigma A})$,

Km    is a constant; parameter of the systems.

The limits imposed by present techniques are related to the use of the sign of the relative phase; in fact, for low values of the signal to noise ratio (targets quite for from the radar) and low values (targets close to the monopulse antenna boresight) the difference channel signal is mascked by the receiver noise. In this situation the relative phase may take, with equal probability, values related to the positive or negative emiplane, which implies greatest uncertainty on sign and therefore appreciable increase in overage r.m.s. error, which may be verified either in an analytical-simulating or experimental manner /3/.

Object of the present invention is therefore a device capable of modifying the amplitude monopulse receiver so as to improve its azimuth accuracy, particularly for distant targets (and therefore for low signal to noise ratioes) close to the antenna boresight.

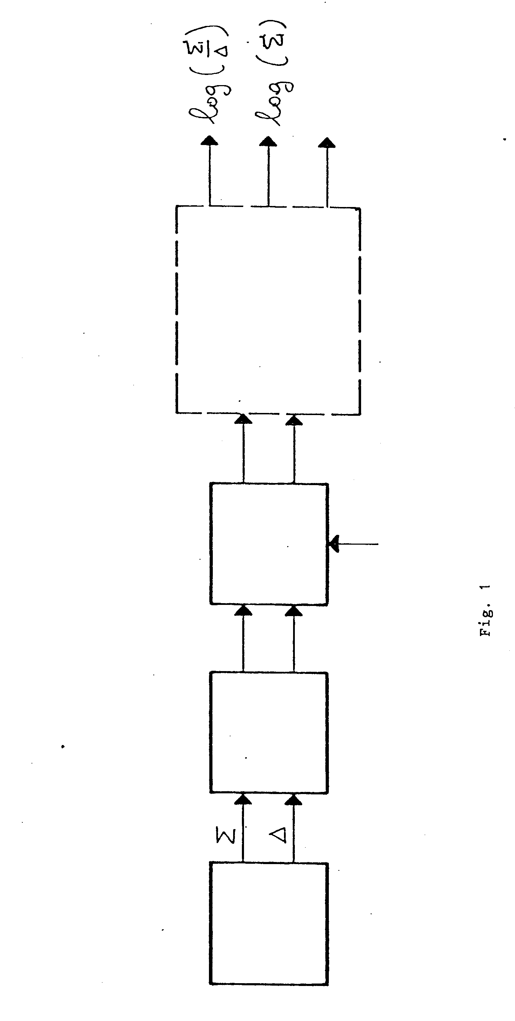

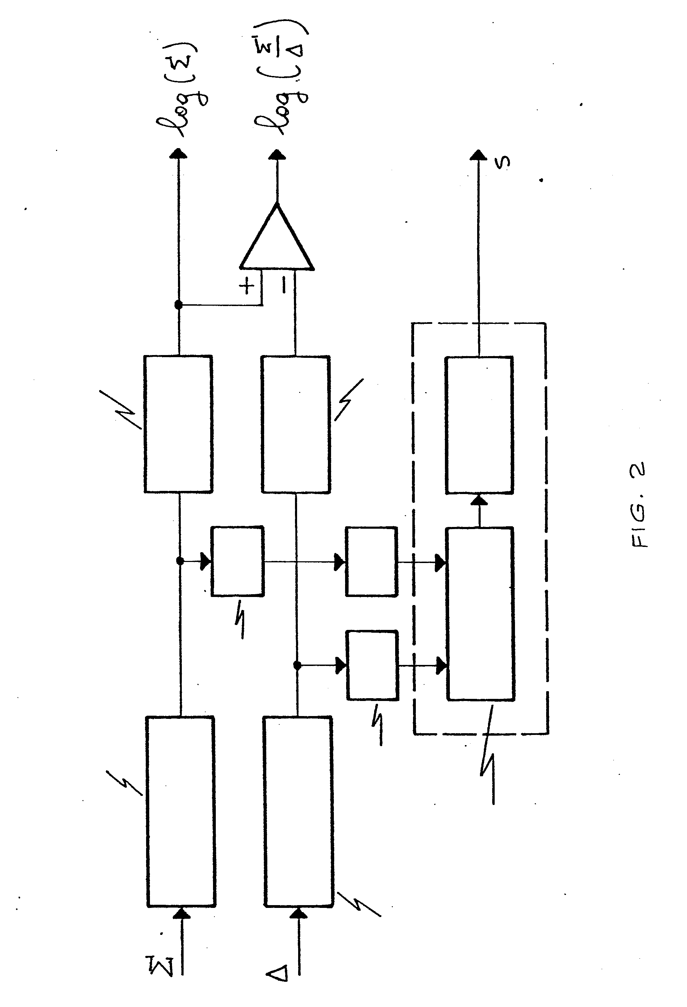

Such device may be applied to any amplitude monopulse receiver of the type shown in figures 1 & 2, and its application is particularly frintful in SSRS where azimuth precision requirements are very stringent.

The principle of operation of the device in question is based on the replacement within algorithm (1) of quantily with $S = \text{sign} (\cos \Phi_{Z\Delta})$, $C = \cos \Phi_{Z\Delta}$ in fact:

$$\hat{\Theta} = C \ K_m \ b^{-z} \tag{2}$$

Therefore azimuth angle error in the most critical operative conditions described above, is drastically reduced because here the relative phase ranges significantly from 0° to 180° (according to whether the A/C is to the right or the left of the boresight) and its cosine is almost zero. Therefore, as relation (2) shows measured, azimuth values close to zero can result and therefore also an appreciable error reduction is achieved. Seen from another viewpoint, relation (2) corresponds to the scalar product of the sum signal vector and the difference vector; of the thermal noise which adds to the latter, which is most relevant in critical operative situations, only the component parallel to the sum vector introduces an error, as the orthogonal one does not contribute to the result of the scalar product. There follows an accuracy improvement compared to relation (1) which for azimuth angles equal to or close to zero is equal to halving of the thermal noise power.

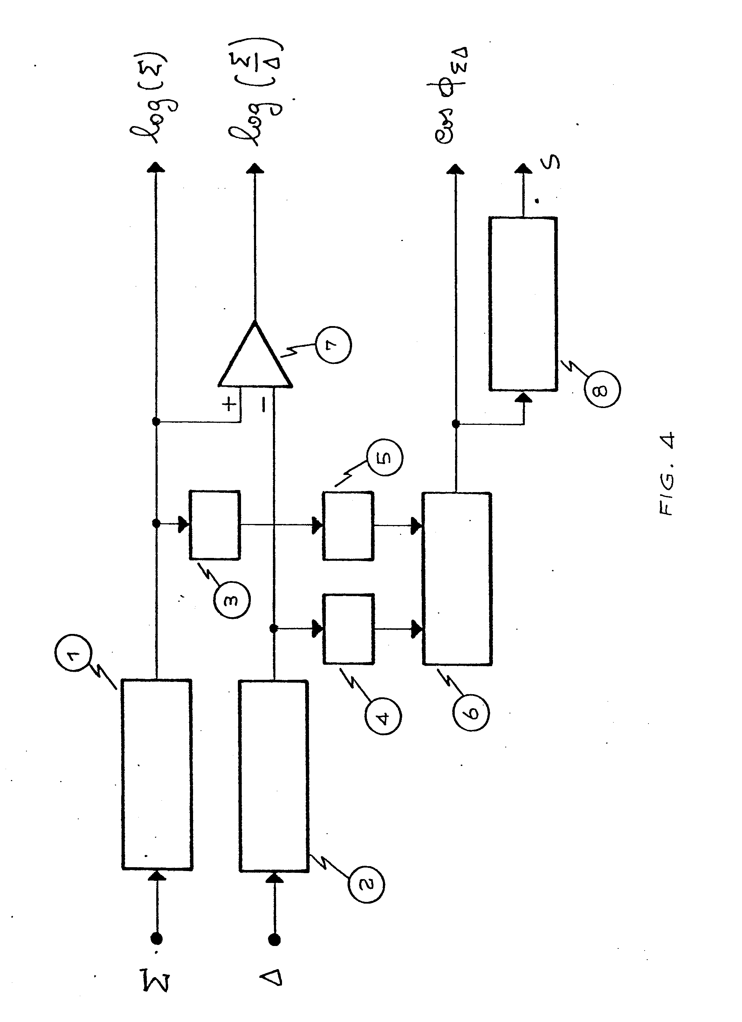

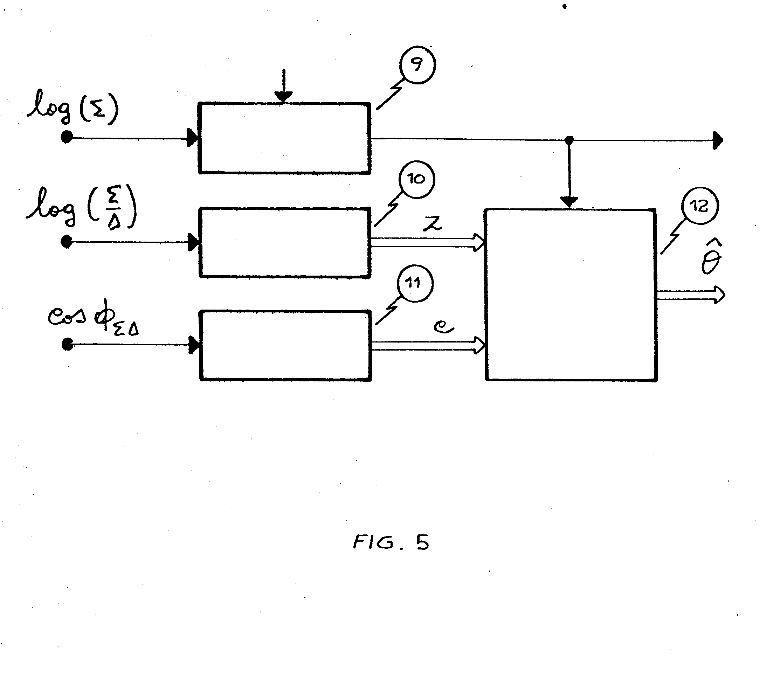

The device presented is therefore capable of effecting an estimate of azimuth by sinthesezing relation (2) in accordance with schematics shown in Figures 4 & 5.

The invention will now be described as an illustration only, and is not limited to this, with reference to the figures attached.

Figure 1 shows the analogue part of the monopulse receiver relevant to previous technique.

Figure 2 shows the schematic of an intermediate frequency receiver and detectors relevant to previous technique.

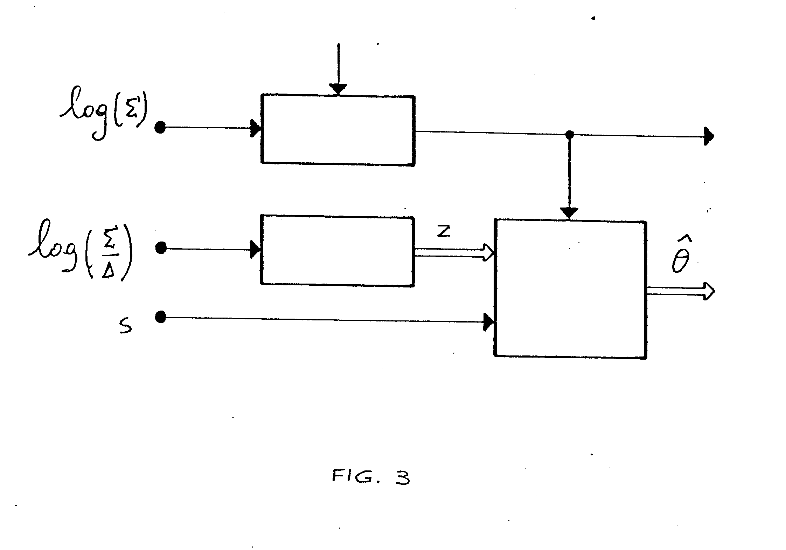

Figure 3 shows the schematic of a processor for analogue measurement relevant to the previous technique.

Figure 4 shows the intermediate frequency receiver schematic & detectors relevant to the invention presented.

Figure 5 shows the schematic of the processor for the angle measurement, i.e. of the device subject of this invention is one of its preferred forms, here called "Variant A".

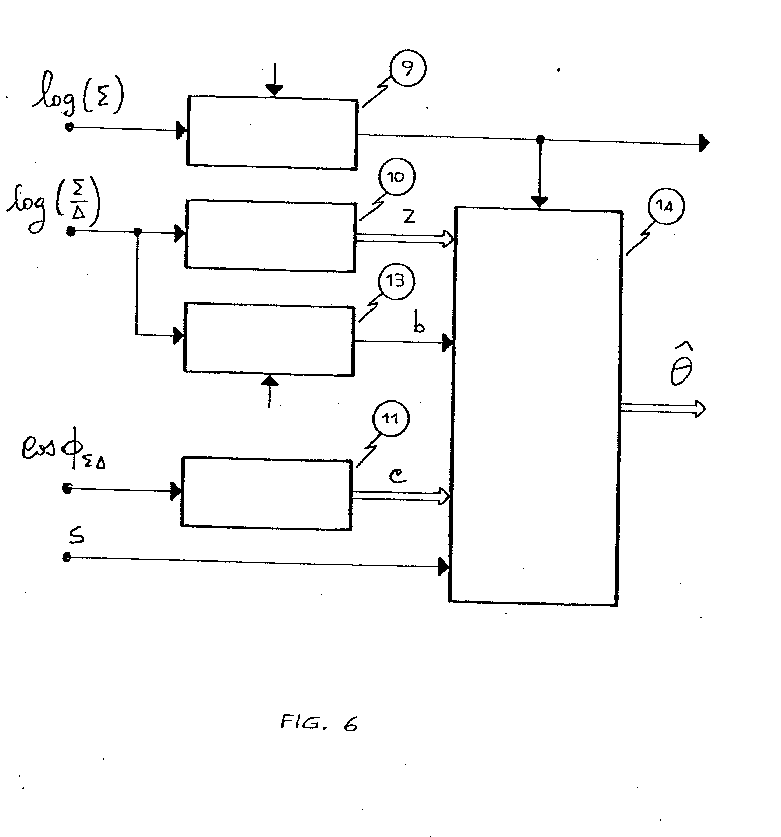

Figure 6 shows the schematic of the processor for angle measurement, i.e. the device subject of this invention in one of its preferred versions here called "Variant B".

As we have seen, figures 1, 2 & 3 serve the only purpose of illustrating previous technique in detail. Figures 4, 5 & 6 show the present invention with reference to some of its presently preferred forms which are presented as illustrations only, but are not limited to these alone.

Figure 4 shows the intermediate frequency receiver, made up of two logarithmic amplifiers of the sum (1) and difference (2), of hard limiters (3) & (4), meant to keep information of the phase of the two channels only, and finally of phase shifter (5) which rotates channel information by 90°. The two limited signals, one of which phase shifted, are sent to a phase detector (6) which gives way to a video signal proportional to the sine of the phase difference of its inputs and therefore to the cosine of the phase difference $\Phi_{\Sigma\Delta}$ of the two sum and difference channels. A comparator (8) compares such cosine with zero and provides the sign of

$\Phi_{\Sigma\Delta}$ : sign $\Phi_{\Sigma\Delta}$

Finally, subtractor (7) of blocks (1) and (2) outputs provides a signal, $\log\left(\dfrac{\Sigma}{\Delta}\right)$, which, together with cos $\Phi_{\Sigma\Delta}$ , sign $\Phi_{\Sigma\Delta}$ and block (1) output

(signal log ($\frac{\Sigma}{\Delta}$)) is sent to the processor, which is described in an illustrative manner, but is not confined to this alone, in figure 5. Block (9) is the comparator of signal log (   ) having a detection threshold which serves the purpose of enabling signal processing.

Signal log ($\Sigma$) is sent to block (10), which is an analogue-numeric converter; signal cos $\phi_{z\Delta}$ is sent to block (11) which is another analogue-numeric converter, outputs Z & C if the two converters (10) and (11) respectively are sent to decoder (12) which, through use of techniques well known to those versed in the art of numeric processing, calculates target azimuth through relation (2).

The number of bits Np of converter (11) is chosen as a tradeoff between cost and azimuth accuracy; it should be noted that for Np = 1 the result of monopulse processing in techniques previous to this invention is desired. Typical results of the tradeoff are Np = 2 and Np = 4. The quantization intervals may not be uniform.

The device, subject of this invention may be modified (B variant) for applications in which phase errors between sum and difference channels due to radar imperfections, are such as to make attractive azimuth estimate through relation (1), i.e. the previous technique, when the critical conditions are not met, i.e. when the ratio S/N on the difference channel is not too low & when the target is sufficiently off boreseight (zero azimuth).

To verify such instance, a comparator of log ($\Sigma/\Delta$) signal with a threshold has been added to variant B: if the signal passes the threshold it is decided that the critical situation is present and relation (2) us used, if not, relation (1) is adopted.

Figure 6 shows in an illustrative but not limiting manner, variant B of this invention. Blocks (9), (10) and (11) carry out the same functions of variant A; block (13) is the comparator, specified above, which delivers its output b to decoder (14), which carries out relation (1) or (2) according to the value of b using well known methods.

The invention in subject may be used in monopulse type radars, and in particular in Secondary Surveillance Radars (SSRs).

CLAIMS

1. Device for angle measurement to be preferably used in amplitude monopulse receivers, characterized by being made up of two logarithmic amplifiers (1) e (2) which deliver their output to two hard limiters (3) and (4) and following 90° phase shift of one of such outputs by means of phase shifter (5), are sent to a phase detector (6), whose output is sent both to an analogue/numeric converter (11) and to a zero comparator (8) while outputs of logarithmic amplifiers (1) and (2) are substracted from block (7), while the result is converted into numeric form through analogue/numeric converter (10) and compared with a threshold, settable, within comparator (13); outputs of blocks (10) and (13) together with blocks (11) and (8), are sent to decoder (14), enabled by comparator (9) output which compares output of amplifier (1) with a settable detection threshold, while decoder (14) provides angle measurement using either block (11) or block (6) depending on the binary value at the output of block (13).

2. Device for angle measurement, as under claim 1, characterized by the fact that (Figure 5): comparators (8) figure 4 and (13) are abolished and decoder (12) used output of blocks (10) and (11) for angle measurement enabled by output of block (9).

3. Device, as per claim 1 & 2 characterized by the fact that it may be developed either through dedicated hardware of through firmware.

4. Device as per claims above, characterized by the fact that it may be applied to newly developed radars ortoexisting ones with minimum cost and minimum circuit modifications, with particular reference to Secondary Surveillance Radars (SSRs).

Fig. 1

0224447

FIG. 2

2/6

0224447

$log(\Sigma)$

$log\left(\dfrac{\Sigma}{\Delta}\right)$

$z$

$s$

$\hat{\theta}$

FIG. 3

FIG. 4

0224447

FIG. 5

FIG. 6

0224447

European Patent
Office

**EUROPEAN SEARCH REPORT**

Application number

EP 86 83 0307

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 890 617 (MOULTON) <br> * Column 3, line 50 - column 7, line 35; figure 1 * | 1 | G 01 S 13/44 |
| A | ONDE ELECTRIQUE, vol. 64, no. 4, July-August 1984, pages 21-27, Argenton-sur-Creuse, FR; C. GUERIN et al.: "Radar secondaire monopulsé" <br> * Whole document * | 1,4 | |
| A | EP-A-0 025 264 (MARCONI) <br> * Figure 2 * | 1 | |
| A | US-A-3 943 512 (DEMPSEY) | | |
| D,T | IEEE TRANSACTIONS ON AEROSPACE AND ELECTRONIC SYSTEMS, vol. AES-19, no. 6, November 1983, pages 884-897, IEEE, New York, US; G. JACOVITTI: "Performance analysis of monopulse receivers for secondary surveillance radar" <br> * Whole document * <br> --- -/- | | TECHNICAL FIELDS SEARCHED (Int. Cl.4) <br><br> G 01 S |

The present search report has been drawn up for all claims

| Place of search | Date of completion of the search | Examiner |
|---|---|---|
| THE HAGUE | 20-02-1987 | DEVINE J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| | DOCUMENTS CONSIDERED TO BE RELEVANT | | Page  2 |
|---|---|---|---|
| Category | Citation of document with indication. where appropriate, of relevant passages | Relevant to claim | CLASSIFICATION OF THE APPLICATION (Int. Cl.4) |
| D,T | PROCEEDINGS INT. RADAR SYMP. INDIA, IRSI-83, 9th-12th October 1983, pages 416-423, Bangalore, IN; G. GALATI et al.: "The evolution of secondary surveillance radar" * Whole document * ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 20-02-1987 | DEVINE J.J |